# EUROPÄISCHE PATENTANMELDUNG

(11) **EP 2 735 388 A2**
(43) Veröffentlichungstag der Anmeldung: **28.05.2014**
(21) Anmeldenummer: 13156401.5
(22) Anmeldetag: 22.02.2013
(51) Int. Cl.: B22D 29/00, F16F 7/00

(54) **Entkernvorrichtung**

(30) Priorität: 26.11.2012 DE 202012011287 U
(71) Anmelder: Roll, Andreas, 88085 Langenargen (DE)
(72) Erfinder: Roll, Andreas, 88085 Langenargen (DE)
(74) Vertreter: Lemcke, Brommer & Partner Patentanwälte Partnerschaft mbB

(57) **Zusammenfassung**

Die vorliegende Erfindung betrifft eine Entkernvorrichtung zum Entkernen von Gussteilen 1 mit Sandkern, welche mindestens eine Halterung 2 zum Halten oder Unterstützen eines zu entkernenden Gussteils 1 umfasst, wobei die Halterung 2 mit Dämpfungselementen 3 versehen ist, auf oder an denen das Gussteil 1 zur Vermeidung einer Beschädigung durch Hämmern und/oder Rütteln aufliegt oder anliegt. Erfindungsgemäß ist ein Teil der Dämpfungselemente (3) aus Drahtkissenelementen (4) gebildet.

## Beschreibung

Die Erfindung betrifft eine Entkernvorrichtung zum Entkernen von Gussteilen mit Sandkern nach dem Oberbegriff des Anspruchs 1. Eine solche Entkernvorrichtung umfasst Halterungen zum Halten oder Unterstützen eines zu entkernenden Gussteils. Die Halterungen sind mit Dämpfungselementen versehen, auf denen bzw. an denen das Gussteil aufliegt oder anliegt.

Wenn Gussteile, insbesondere Metallgussteile, Hohlräume aufweisen sollen, werden oft Sandkerne verwendet, die in die Gussform eingelegt werden und den zu bildenden Hohlraum beim Gießen von flüssigem Gießmaterial freihalten. Nach dem Erstarren des Gussteils müssen die Sandkerne dann entfernt werden, um den Hohlraum im Gussteil freizugeben.

Sandkerne werden aus Formsand gebildet, die mit einem Kernsandbinder, beispielsweise einem Kunstharz, einem silikatischen, einem organischen oder anorganischen Bindemittel, formbar sowie druck- und scherfest gemacht werden.

Zum Entkernen nach dem Erstarren des Gussteils müssen die beim Gießen notwendigerweise formstabilen Sandkerne destabilisiert werden. Dies erfolgt maschinell in einer Entkernvorrichtung, in der das Entkernen üblicherweise einstufig oder zweistufig erfolgt.

Bei der einstufigen Entkernung wird das erstarrte und entformte Gussteil auf eine Halterung gesetzt und mit einem meist pneumatischen Hammer bearbeitet. Durch das Hämmern auf das Gussteil werden Erschütterungen in den Kern eingeleitet wodurch dieser bricht. Üblicherweise werden die Hämmer an den Angüssen oder am Speiser angesetzt, um das Gussteil zu schonen. Zum selben Zweck ist die Halterung mit Dämpfungselementen versehen auf denen das Gussteil aufliegt. Durch solche Dämfungselemente wird vermieden, dass das Gussteil beim Hämmern durch Gegenkräfte der Halterung beschädigt wird.

Bei der zweistufigen Entkernung wird nach der beschriebenen ersten Stufe das Gussteil in einer zweiten darauf folgenden Stufe gerüttelt. Dies kann in derselben Halterung, oder aber in einer anderen Halterung und gegebenenfalls in einer separaten Rüttelvorrichtung erfolgen. Durch das intensive Rütteln wird der gebrochene Sandkern durch Massenträgheitseffekte und Reibungseffekte (innere Reibung, Reibung an der Hohlraumwand) so weit zerrieben und zerkleinert, dass er aus dem Gussteil ausgeschüttet und/oder ausgeblasen werden kann.

Auch in der zweiten Stufe, in der das Gussteil gerüttelt wird, ist es wichtig, die Halterung mit Dämpfungselementen zu versehen, an denen das Gussteil anliegt, um Beschädigungen desselben durch den Rüttelvorgang zu vermeiden.

Die Dämpfungselemente müssen hierbei mehrere, sich widersprechende Eigenschaften in sich vereinen: Durch das Hämmern in der ersten Stufe des Entkernens übertragen sich Impulse durch das Gussteil auf die Dämpfungselemente der Halterung, und von dort Gegenimpulse in das Gussteil zurück. Die Dämpfungselemente müssen daher weicher als das Gussmaterial sein, da ansonsten Macken und Schlagstellen als Beschädigungen im Gussteil entstehen. Bei der zweiten Stufe des Entkernvorgangs, beim Rütteln, sind Reibungen zwischen dem Gussteil und den Halterungen der Entkernvorrichtung nicht zu vermeiden. Die Dämpfungselemente der Halterungen müssen daher verschleißfest sein, um nicht nach wenigen Entkernvorgängen ausgetauscht werden zu müssen. Schließlich zerfallen Sandkerne beim Hämmern und Rütteln um so besser, je höher die Temperatur des Gussteils und damit des Sandkerns ist, insbesondere wenn ein anorganischer Kernsandbinder verwendet wird. Dementsprechend muss die Halterung der Entkernvorrichtung, und insbesondere müssen deren Dämpfungselemente möglichst hohen Temperaturen Stand halten können.

Im Stand der Technik werden Dämpfungselemente aus duroplastischen Kunststoffen verwendet. Diese sind in der Regel weicher als das Gussteil und können mäßig hohen Temperaturen Stand halten, typischerweise bis 80°C, jedoch ist ihre Verschleißfestigkeit verbesserungsfähig.

Der vorliegenden Erfindung liegt daher die Aufgabe zugrunde, Entkernvorrichtungen der eingangs genannten Art mit verbesserten Dämpfungselementen auszurüsten, die die oben genannten Anforderungen besser als im Stand der Technik erfüllen.

Gelöst ist diese Aufgabe durch eine Entkernvorrichtung nach den Merkmalen des Anspruchs 1 und durch eine Verwendung eines Drahtkissenelements als Dämpfungselement für eine Halterung zum Halten oder Unterstützen eines Gussteils beim Entkernen in einer Entkernvorrichtung. Bevorzugte Ausgestaltungen der erfindungsgemäßen Entkernvorrichtung sind in den Ansprüchen 2 bis 6 niedergelegt.

Gemäß der vorliegenden Erfindung wird also vorgeschlagen, für die Dämpfungselemente, oder für einen Teil der Dämpfungselemente, oder als Teil von einzelnen Dämpfungselementen nicht mehr wie bisher Kunststoff zu verwenden, sondern Drahtkissenelemente.

Solche Drahtkissenelemente sind Gebilde aus Drähten, die mit textilen Verarbeitungsmethoden zu flächigen Gebilden oder zu Formkörpern geformt wurden. Diese textilen Verarbeitungsmethoden sind bevorzugt Stricken, Weben und/oder Wirken, wobei im Rahmen der vorliegenden Erfindung Drahtgestricke als Basis für die Drahtkissenelemente bevorzugt sind.

Die Drahtkissenelemente, die die Dämpfungselemente oder einen Teil derselben bilden, können ganz einfach aus einem Drahtgestricke bestehen, oder aber auch aus einem Drahtgewebe oder einem Drahtgewirke. Sie können auch aus mehreren Schichten von Drahtgestricken und/oder Drahtgewirken und/oder Drahtgeweben bestehen.

Besonders bevorzugt ist es jedoch, wenn die Drahtkissenelemente als Drahtpressformlinge hergestellt werden, die aus einem oder mehreren verpressten Drahtgestricken bestehen. Alternativ können auch Drahtgewebe oder Drahtgewirke zu Drahtpressformlingen verpresst werden. Als weitere Alterative werden Kombinationen aus Drahtgestricken und/oder Drahtgeweben und/oder Drahtgewirken miteinander verpresst, um die erfindungsgemäßen Drahtpressformlinge als Drahtkissenelemente herzustellen.

Für die Drahtkissenelemente können Metalldrähte oder Keramikdrähte, oder auch eine Kombination aus beidem verwendet werden. Zweckmäßigerweise bestehen die Drähte im Normalfall aus Stahl.

Mit der vorliegenden Erfindung, gemäß der die bislang aus Kunststoff bestehenden Dämpfungselemente von Entkernvorrichtungen durch Drahtkissenelemente ersetzt werden, werden die eingangs genannten unterschiedlichen Anforderungen an solche Dämpfungselemente einer Entkernvorrichtung erfüllt: Beim Hämmern zum Brechen der Sandkerne sind keine Beschädigungen des Gussteils zu befürchten, da die Drahtkissenelemente nachgiebig sind und die Hammerimpulse aufnehmen. Beim Rütteln zum Zerkleinern der Sandkerne ist bei den erfindungsgemäß aus Drahtkissenelementen gebildeten Dämpfungselementen kein übermäßiger Verschleiß zu befürchten, da die einzelnen Drähte, insbesondere wenn es Stahldrähte sind, sehr verschleißfest gegen Reibungseffekte sind. Schließlich sind die erfindungsgemäßen Drahtkissenelemente hitzebeständig, wobei sie je nach gewähltem Drahtmaterial sogar gegen höhere Temperaturen beständig sind, als das Gussteil selbst. Es ist mit der vorliegenden Erfindung also möglich, das Entkernen bei bislang unerreichten hohen Temperaturen des Gussteils durchzuführen, so dass die für das Entkernen benötigte Zeit signifikant verkürzt wird.

Mit der vorliegenden Erfindung erhöht sich demnach nicht nur die Standzeit der in einer Entkernvorrichtung notwendigen Dämpfungselemente, was Stillstandszeiten zum Austausch derselben verringert, sondern es wird auch die für den einzelnen Entkernvorgang benötigte Zeit verkürzt, was zusätzliche Vorteile bietet.

Ein Ausführungsbeispiel für eine erfindungsgemäß ausgestaltete Entkernvorrichtung wird im folgenden anhand der beigefügten Zeichnungen erläutert. Es zeigen:
- Figur 1: eine schematische Schnittdarstellung eines Teils einer erfindungsgemäß ausgestalteten Entkernvorrichtung mit eingesetztem Gussteil;
- Figur 2: unterschiedliche Beispiele für erfindungsgemäß ausgestaltete Dämpfungselemente.

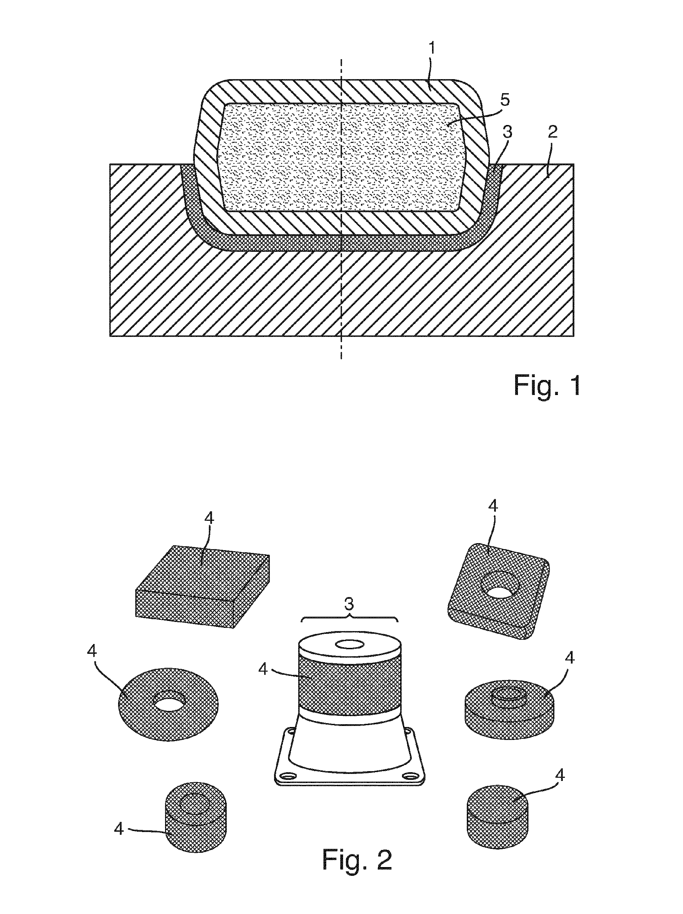

In Figur 1 ist ein Teil einer erfindungsgemäß ausgestalteten Entkernvorrichtung im Schnitt dargestellt. Es handelt sich um eine Rüttelvorrichtung, in die ein Gussteil 1 eingesetzt ist. Bei diesem Gussteil 1 handelt es sich um ein gegossenes Fahrwerksteil für ein Kraftfahrzeug, dessen Hohlraum mit Formsand 5 ausgefüllt ist. Dieser Formsand 5 wurde bereits in einem anderen Teil der Entkernvorrichtung (nicht dargestellt) durch Hämmern mit einer Schlagenergie von typischerweise 50 J bis 70 J je Schlag gebrochen. In der hier dargestellten Rütteleinrichtung wird das Gussteil 1 mit einer typischen Beschleunigung von bis zu 500 m/s² gerüttelt, um den gebrochenen Sandkern zu zerkleinern, so dass er durch Ausschütten und Ausblasen aus dem Gussteil 1 entfernt werden kann.

Wie in Figur 1 gut zu erkennen ist, sitzt das Gussteil 1 in einer Halterung 2 mit einem Dämpfungselement 3, das das Gussteil 1 berührt und bei der Rüttelbewegung abstützt.

Das Dämpfungselement 3, das in Figur 1 nur schematisch angedeutet ist, ist in Figur 2 in mehreren Beispielen gezeigt. Wie hier erkennbar ist, handelt es sich bei den Dämpfungselementen 3 erfindungsgemäß um Drahtkissenelemente, die hier aus zu Drahpressformlingen verpressten Drahtgestricken bestehen. Zur Herstellung dieser Dahtgestricke wurden im Rundstrickverfahren ein bis drei Stahldrähte mit einer bestimmten Anzahl von Nadeln zu Schläuchen verstrickt. Die so entstandenen Gestrickeschläuche oder Abschnitte derselben wurden dann in einem Werkzeug, das der Kontur des erwünschten Drahtkissenelements entspricht, unter hohem Druck zu formstabilen Drahtpressformlingen verpresst.

Diese Drahtpressformlinge sind formstabil, jedoch elastisch nachgiebig, dabei gleichzeitig verschleißfest gegen Reibung und unempfindlich gegen hohe Temperaturen.

## Patentansprüche

1. Entkernvorrichtung zum Entkernen von Gussteilen (1) mit Sandkern, umfassend mindestens eine Halterung (2) zum Halten oder Unterstützen eines zu entkernenden Gussteils (1), wobei die Halterung (2) mit Dämpfungselementen (3) versehen ist, auf oder an denen das Gussteil (1) zur Vermeidung einer Beschädigung durch Hämmern und/oder Rütteln aufliegt oder anliegt,
**dadurch gekennzeichnet,**
**dass** zumindest ein Teil der Dämpfungselemente (3) aus Drahtkissenelementen (4) gebildet ist.

2. Entkernvorrichtung nach Anspruch 1,
**dadurch gekennzeichnet,**
**dass** die Drahtkissenelemente (4) aus einem Drahtgestricke hergestellt sind.

3. Entkernvorrichtung nach einem der Ansprüche 1 oder 2,
**dadurch gekennzeichnet,**
**dass** die Drahtkissenelemente (4) aus einem Drahtgewebe und/oder einem Drahtgewirke hergestellt sind.

4. Entkernvorrichtung nach mindestens einem der Ansprüche 1 bis 3,
**dadurch gekennzeichnet,**
**dass** die Drahtkissenelemente (4) als Drahtpressformlinge aus einem verpressten Drahtgestricke und/oder Drahtgewebe und/oder Drahtgewirke ausgebildet sind.

5. Entkernvorrichtung nach mindestens einem der Ansprüche 1 bis 4, **dadurch gekennzeichnet,**
**dass** die Drahtkissenelemente (4) aus einem Gestricke oder Gewebe oder Gewirke aus Metalldrähten und/oder aus Keramikdrähten hergestellt sind.

6. Entkernvorrichtung nach Anspruch 5,
**dadurch gekennzeichnet,**
**dass** die Metalldrähte aus Stahl bestehen.
